# EUROPEAN PATENT APPLICATION

(11) **EP 3 040 116 A1**
(43) Date of publication of application: **06.07.2016**
(21) Application number: 14894816.9
(22) Date of filing: 11.10.2014
(51) Int. Cl.: B01J 3/06, C01B 31/06

(54) **ROUGH-SURFACE DIAMOND SYNTHESIS METHOD**

(71) Applicant: Henan Famous Diamond Industrial Co., Ltd., Jiaozuo, Henan 454000 (CN)
(72) Inventor: CHEN, Zheng, Flemington, New Jersey 08822 (US); LI, Jianlin, Jiaozuo Henan 454000 (CN); LI, Shuyun, Jiaozuo Henan 454000 (CN); LI, Li, Jiaozuo Henan 454000 (CN)
(74) Representative: Rössler, Matthias
(86) International application number: PCT/CN2014/088337
(87) International publication number: WO 2016/054815

(57) **Abstract**

The Invention discloses a method of synthesizing a rough-surfaced diamond, especially a method of manufacturing a rough-surfaced and conductive black polycrystalline diamond, which is characterized in that it includes the following steps: 1) compress the mixed graphite and catalyst powder for standard HPHT process into a cylinder shape and ensure that the porosity is <35%; 2) use standard HPHT process to synthesize diamond; 3) when the diamond is formed and the relative pressure declines approximately to 0, with the top hammer in good contact with the synthesized pieces, control and maintain the temperature within 800-1250°C for 60-180mins; or after the diamond is formed, take out the cylinder-shaped synthetics produced by using HPHT process into the vacuum furnace, heat it to 800~1200°C and maintain it for 60-180mins; 4) take out the cylinder-shaped synthetics and remove residual graphite and catalyst. After washing the synthetics with clean water, drying the synthetics in a classified manner, or sieving the synthetics after dried, classify the diamond particles according to different intensity and mesh, so as to get rough-surfaced diamond with different particle sizes.

## Description

### Technical field

The Invention involves a method of synthesizing a rough-surfaced diamond.

### Background technology

Diamond micro-powder has high rigidity, high wearability and good corrosion resistance, which has made it a favorite material in grinding and polishing field at the very beginning since it was developed. Natural diamond is commonly known as diamond. It has always been the most expensive jewel over the centuries as a symbol of dignity, beauty, holiness and eternity. However, the brilliant and gorgeous diamond cannot be formed without grinding and polishing. At the beginning, people attempted to realize the polishing of diamond with other materials, but the diamond is hard and corrosion resistant with strong invulnerability. Then, the diamond micro-powder was born at the right moment. After entering into the industrial age, diamond micro-powder has not only been used in the polishing of diamond, but also widely used in various fields of national economy. For instance, in stone industry, soft polishing pad and fine polishing pad made of diamond micro-powder is used for the surface polishing of stone material; in wood industry, sophisticated grinding wheel made of diamond micro-powder is used for the finishing of woodworking tool; in automobile industry, honing bar made of diamond micro-powder is used for the processing of cylinder hole, crankshaft hole, rod hole and other holes; in optical field, fine grinding pad and superfine grinding pad made of diamond micro-powder is used for the processing of optical lenses; in oil exploitation and geological exploration, diamond compact made of diamond micro-powder is the teeth of the drill; in machining industry, diamond compact made of diamond micro-powder has replaced traditional hard alloy and become sharp knife blade; in metal processing, diamond micro-powder has become excellent material for the precision polishing of the metal surface. Therefore, diamond micro-powder has been widely used in many fields. However, with the development of science and technology, higher and higher requirements are raised on grinding and polishing, which is mainly reflected in two aspects: high efficiency and high precision. Traditional diamond micro-powder is of monocrystalline structure, relatively smooth particle surface, small number of cutting edges and weak cutting force; cutting edge of single particle is large and hard and has serious scratches; the particle fractures along the cleavage surface under the impact of external forces, and then the particle size will soon become smaller, and the grinding life is short. In IT industry, hard disk and magnetic head have extremely high surface smoothness and flatness; in optical communication, after the polishing of the end face of optical fiber connector, the roughness Ra is in nanometer; in LED industry, grinding and polishing of sapphire wafer requires not only strong cutting force, but also scratch-free wafer surface, but traditional monocrystalline diamond micro-power cannot realize such requirements.

Now, rough-surfaced diamond particle is generally obtained by processing of diamond. For instance, United States Patent US 12560899 (application date: September 16, 2009) disclosed an abrasive particle with irregular surface and particle surface roughness smaller than 0.95. The particle is the modified abrasive particle, manufactured by the following procedures: to provide multiple abrasive particles, apply reactive coating on the particles, heat the coated particles, restore and modify the abrasive particles. However, the manufacturing process is complicated and industrial production efficiency is low.

### Description of the Invention

The Invention provides a method of synthesizing rough-surfaced diamond directly on the basis of HPHT diamond synthesis process.

### Technical solution of the Invention

A method of synthesizing rough-surfaced diamond, comprising the following steps:
1) Compress the mixed graphite and catalyst powder for standard HPHT process into a cylinder and ensure that the porosity is <35%;
2) Use standard HPHT process to synthesize diamond;
3) When the diamond is formed and the relative pressure declines approximately to 0, while keeping the top hammer in good contact with the synthesized pieces, control and maintain the temperature within 800-1250°C for 60-180mins; or after the diamond is formed, take out the cylinder-shaped synthetics produced by using HPHT process into the vacuum furnace, heat it to 800-1250°C and maintain it for 60-180mins;
4) Take out the cylinder-shaped synthetics and remove residual graphite and catalyst. After washing the synthetics with clean water, drying the synthetics in a classified manner, or sieving the synthetics after dried, classify the diamond particles according to different intensity and mesh, so as to get rough-surfaced diamond with different particle sizes.

Further, the weight ratio between catalyst for standard HPHT process and graphite is 0.75:1- 1.5:1, e.g. 1:1.

As a preferred embodiment, the temperature in Step 3) is 1100°C.

As another preferred embodiment, the most preferred temperature in Step 3) is 1050°C.

Compared with existing technology, the present invention discloses a method of synthesizing rough-surfaced diamond directly on the basis of HPHT diamond synthesis process, which is of simple process, high industrial production efficiency, and the rough-surfaced diamond produced may be of monocrystalline or polycrystalline structure; particle size is within 0.5µm∼900µm, and there is obvious corrosion pit on the surface of the diamond, significantly different from the surface of the naturally growing diamond under high temperature and high pressure or the fractured and naturally growing diamond.

Further, by using the method of synthesizing rough-surfaced diamond, black and conductive polycrystalline diamond can be synthesized, with rough surface, conductivity and black color retained, which can meet the requirements of different industries.

### Descriptions of figures

Figure 1 shows diamond particles synthesized by using standard HPHT process.
Figure 2 shows another diamond particles synthesized by using standard HPHT process.
Figure 3 shows rough-surfaced diamond particles synthesized by using the method of the present invention.
Figure 4 shows another rough-surfaced diamond particles synthesized by using the method of the present invention.
Figure 5 shows the process curves of pressure, temperature and time of the present invention.

### Specific embodiments

The Invention is further described through the attached figures and the following specific embodiments.

### Example 1

A method of synthesizing rough-surfaced diamond, including the following steps:
1) Compress the mixed graphite and catalyst powder for standard HPHT process into a cylinder shape and ensure that the porosity is <35%; the weight ratio between catalyst for standard HPHT process and graphite is 1.5:1
2) Use standard HPHT process to synthesize diamond, and the target particle size of synthetic diamond is 1µm-50µm;
3) When the diamond is formed and the relative pressure declines approximately to 0, while keeping the top hammer in good contact with the synthesized pieces, control at 1000°C for 120mins;
4) Take out the cylinder-shaped synthetics and remove residual graphite and catalyst. Wash the synthetics with clean water, dry the synthetics in a classified manner to get rough-surfaced polycrystalline diamond with main particle sizes (>60%) within 1µm-50µm.

### Example 2

A method of synthesizing rough-surfaced diamond, including the following steps:
1) Compress the mixed graphite and catalyst powder for standard HPHT process into a cylinder shape and ensure that the porosity is <35%; the weight ratio between catalyst for standard HPHT process and graphite is 1:1
2) Use standard HPHT process to synthesize diamond, and the target particle size is 50µm-250µm;
3) After the diamond is formed, take out the cylinder-shaped synthetics into the vacuum furnace, heat it to 1200°C and maintain it for 180mins;
4) Take out the cylinder-shaped synthetics and remove residual graphite and catalyst. After washing the synthetics with clean water, drying and sieving the synthetics, classify the diamond particles according to different intensity and mesh, so as to get rough-surfaced monocrystalline diamond with main particle sizes (>70%) within 50µm-250µm.

### Example 3

A method of synthesizing rough-surfaced diamond, including the following steps:
1) Compress the mixed graphite and catalyst powder for standard HPHT process into a cylinder shape and ensure that the porosity is <35%; the weight ratio between catalyst for standard HPHT process and graphite is 1:1
2) Use standard HPHT process to synthesize black and conductive polycrystalline diamond, and the target particle size is 50µm-250µm;
3) After the diamond is formed, take out the cylinder-shaped synthetics manufactured by using HPHT process into the vacuum furnace, heat it to 1200°C and maintain it for 150mins;
4) Take out the cylinder-shaped synthetics and remove residual graphite and catalyst. After washing the synthetics with clean water, drying and sieving the synthetics, classify the diamond particles according to different intensity and mesh, so as to get rough-surfaced and black polycrystalline diamond with main particle sizes (>70%) within 50µm-250µm.

### Example 4

A method of synthesizing rough-surfaced diamond, including the following steps:
1) Compress the mixed graphite and catalyst powder for standard HPHT process into a cylinder shape and ensure that the porosity is <35%; the weight ratio between catalyst for standard HPHT process and graphite is 0.75:1 1
2) Use standard HPHT process to synthesize monocrystalline diamond, and the target particle size is 100µm-500µm;
3) After the diamond is formed, take out the cylinder-shaped synthetics produced by using HPHT process into the vacuum furnace, heat it to 1250°C and maintain it for 180mins;
4) Take out the cylinder-shaped synthetics and remove residual graphite and catalyst. After washing the synthetics with clean water, drying and sieving the synthetics, classify the diamond particles according to different intensity and mesh, so as to get monocrystalline diamond with main particle sizes (>70%) within 100µm-500µm.

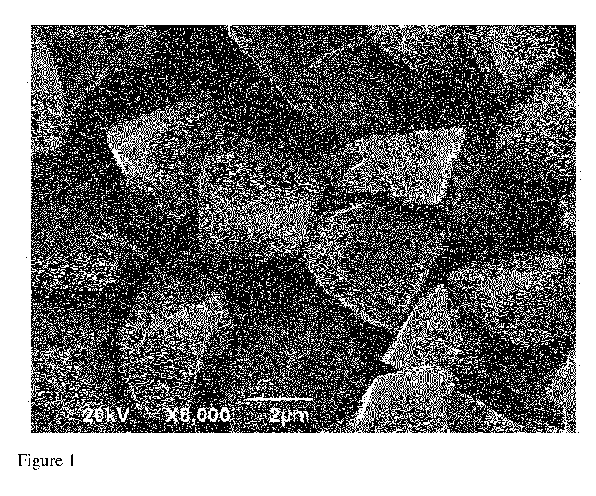

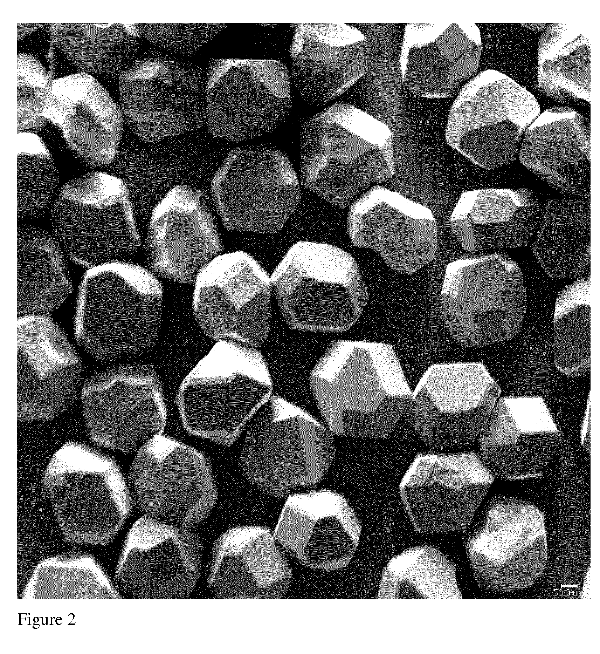

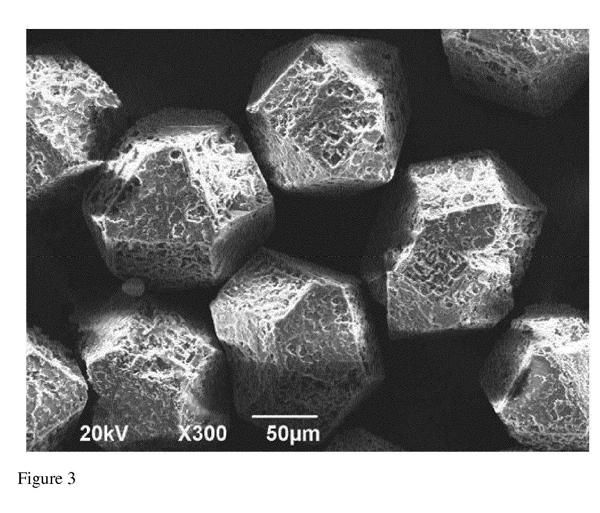

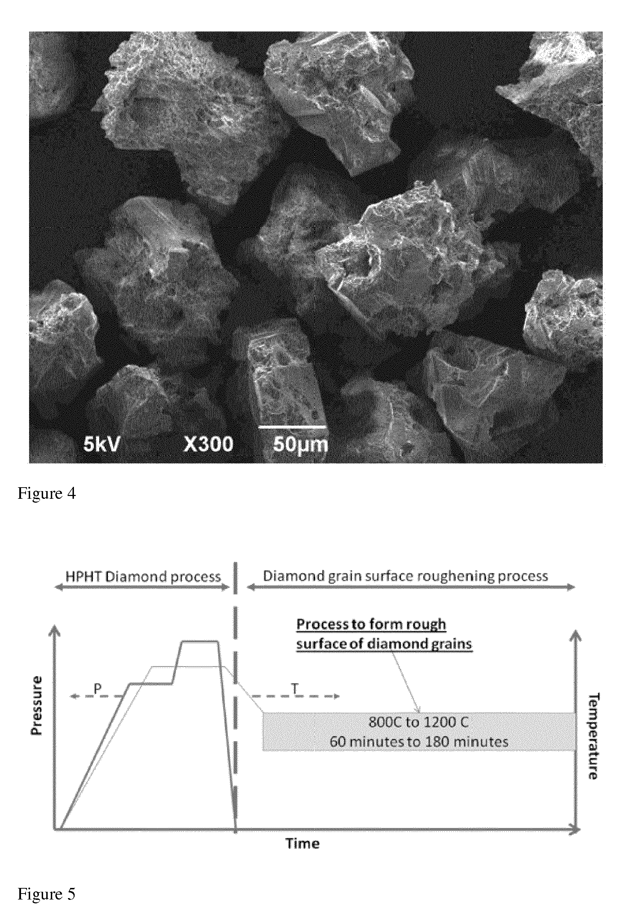

Diamond particles synthesized by using standard HPHT process are as shown in Figure 1 and Figure 2; diamond particles synthesized through examples 1-4 are as shown in Figure 3 and Figure 4.

## Claims

1. A method of synthesizing a rough-surfaced diamond, **characterized in that** it comprises the following steps:
1) Compress the mixed graphite and catalyst powder for standard HPHT process into a cylinder shape and ensure that the porosity is <35%;
2) Use standard HPHT process to synthesize diamond;
3) When the diamond is formed and the relative pressure declines approximately to 0, while keeping the top hammer in good contact with the synthesized pieces, control and maintain the temperature within 800-1250°C for 60-180mins; or after the diamond is formed, take out the cylinder-shaped synthetics produced by using HPHT process into the vacuum furnace, heat it to 800∼1200°C and maintain it for 60-180mins;
4) Take out the cylinder-shaped synthetics and remove residual graphite and catalyst. After washing the synthetics with clean water, drying the synthetics in a classified manner, or sieving the synthetics after dried, classify the diamond particles according to different intensity and mesh, so as to get rough-surfaced diamond with different particle sizes.

2. The method of synthesizing a rough-surfaced diamond according to Claim 1, **characterized in that**, the weight ratio between catalyst for standard HPHT process and graphite is 0.75:1- 1.5:1.

3. The method of synthesizing a rough-surfaced diamond according to Claim 1, **characterized in that**, the preferred temperature in Step 3) is 1100°C.

4. The method of synthesizing a rough-surfaced diamond according to Claim 1, **characterized in that**, the most preferred temperature in Step 3) is 1050°C.

5. Rough-surfaced monocrystalline diamond particles formed by the method of synthesizing a rough-surfaced diamond specified according to Claims 1-4.

6. Rough-surfaced polycrystalline diamond particles formed by the method of synthesizing a rough-surfaced diamond according to Claims 1-4.

7. Rough-surfaced and conductive black polycrystalline diamond particles formed by the method of synthesizing a rough-surfaced diamond according to Claims 1-4.
